# FASCICULE DE BREVET EUROPEEN

(11) **EP 1 114 587 B1**
(45) Date de publication et mention de la délivrance du brevet: **08.03.2006**
(21) Numéro de dépôt: 00403717.2
(22) Date de dépôt: 29.12.2000
(51) Int. Cl.: A23P 1/12, A23C 19/09, A23C 19/16, A01J 25/00, A01J 27/04, A23G 3/20

(54) **Procédé de coextrusion dans des tubes concentriques**
Coextrusionsverfahren durch Koaxialröhren
Coextrusion process through coaxial tubes

(30) Priorité: 07.01.2000 FR 0000186
(43) Date de publication de la demande: 11.07.2001
(73) Titulaire: BONGRAIN S.A., 78220 Viroflay (FR)
(72) Inventeur: Roussel, Hervé, 78730 Saint Arnoult en Yvelines (FR); Genton, Daniel, 78280 Guyancourt (FR)
(74) Mandataire: Geismar, Thierry

(56) Documents cités:
- EP-A- 0 260 194
- DE-A- 3 417 196
- FR-A- 2 386 235
- FR-A- 2 516 356
- FR-E- 94 872
- US-A- 4 468 185
- US-A- 5 194 283
- US-A- 5 792 500
- PATENT ABSTRACTS OF JAPAN vol. 010, no. 366 (C-390), 6 décembre 1986 (1986-12-06) & JP 61 162135 A (RYOZO OOTA), 22 juillet 1986 (1986-07-22)

## Description

L'invention a pour objet un produit alimentaire de type spécialité alimentaire fourrée, un procédé de fabrication d'un tel produit, et un dispositif mettant en oeuvre ce procédé.

On connaît déjà des procédés de coextrusion alimentaire, ainsi que des systèmes d'extrusion seule, alimentaires ou non alimentaires se rapprochant, de par leur conception, de la coextrusion.

On connaît par exemple un système utilisé notamment en pâtisserie, connu de l'homme du métier sous le nom « RHEON », comprenant un appareil intégré constitué de deux pompes à ailettes avec leur trémies se rejoignant au niveau d'une tête de coextrusion standard. L'enveloppe du produit est formée en même temps que le fourrage dans une filière très courte (2 à 3 cm). Aucune cuisson n'est possible dans l'appareil qui supporte difficilement des matières premières trop chaudes, au-delà typiquement de 60°C. Un tel système est complexe à monter et démonter, une trentaine de pièces mécaniques au moins, et donc très difficile à nettoyer quand il s'agit de fromage. Un tel système est utilisé notamment pour coextruder des formes de grosse taille, type boules fourrées, petits pains fourrés, bâtons de gros diamètre (20mm de diamètre minimum), ou type gnocchi.

Avec du fromage notamment, des petites pièces de type bâtonnets fromagers de 10 à 15mm de diamètre, voire moins, ne peuvent être réalisées sans modifications importantes de l'appareil. Le coût et la faible capacité de la machine sont dés éléments négatifs pour produire économiquement de petites pièces, telles que des bâtonnets ou analogues fromagers fourrés.

On connaît également un procédé analogue au procédé précédent, appelé communément « VEMAG » à la différence que l'appareil n'est pas intégré en un même appareil. Il s'agit en fait de deux poussoirs conjugués avec une tête de coextrusion. Cette dernière est également très courte, et reste de diamètre supérieur à 20mm en général pour obtenir un produit à des coûts de production raisonnables.

Dans tous les cas, le coût du système serait prohibitif pour de petites pièces, telles que des bâtonnets alimentaires, notamment fromagers, fourrés.

On connaît également un procédé de remplissage par injection. Il existe en effet des produits qui ressemblent à des produits coextrudés, de type brioche, fourrés après cuisson à l'aide d'une aiguille d'injection. Ce système n'est pas applicable aux fromages en général.

On connaît également des produits de type fourrés pouvant ressembler à des produits coextrudés. Par exemple, en partant d'un produit roulé à partir d'une bande de 2 à 3mm d'épaisseur et de 10cm de largeur, on obtient en déposant un fourrage au centre de la bande avant roulage, un tel produit. C'est le cas par exemple de produits de type pains au chocolat. Un tel procédé pourrait être appliqué au fromage sous certaines conditions de formulation : propriétés de collage et de soudabilité de la pâte fromagère notamment. Le rendu en terme de produit est très différent d'une spécialité fromagère fourrée telle qu'elle va être décrite.

On connaît également des systèmes de co-poussage ou autres systèmes de poussoirs, permettant dé faire du co-poussage de saucisses. Le résultat se présente par exemple sous la forme de saucisses avec un coeur de fromage.

Le système est difficilement adaptable aux fromages à extrait sec élevé décrits dans la suite du texte.

Le document US-A-5 792 500 décrit d'une part un procédé comprenant une étape de refroidissement d'un produit dans une filière, le produit ne comprenant pas de fourrage, et d'autre part un procédé de coextrusion.

Le document FR-94 872 décrit un procédé de fabrication d'un oeuf dur tubulaire par coextrusion, ce procédé comprenant, dans une première section, une étape de formation de l'enveloppe, par chauffage, puis une étape de fourrage de cette enveloppe par du jaune d'oeuf, dans une deuxième section débutant à l'extrémité de la première section.

L'invention vise à obtenir des spécialités alimentaires, notamment fromagères, fourrées de petite dimension typiquement d'un diamètre inférieur à 20mm, notamment de 10 à 15mm en palliant les inconvénients de l'art antérieur pour l'obtention d'un tel type de produit.

L'invention vise également l'obtention de tels produits en utilisant des pâtes fromagères ayant un extrait sec élevé, notamment atteignant 50 à 60%. Avec les systèmes de coextrusion de l'art antérieur, les forces de cisaillement dans la filière de coextrusion sont trop élevées pour un bon rendu produit.

L'invention vise également à utiliser une grande variété possible de formulations pour la fabrication des produits souhaités.

Selon un premier aspect, l'invention concerne un procédé destiné à la fabrication d'un produit alimentaire comprenant une enveloppe solide enrobant au moins un fourrage, à partir d'une base alimentaire destinée à former l'enveloppe du produit et d'au moins un matériau alimentaire de fourrage, dans un dispositif de coextrusion comprenant une filière de coextrusion alimentée avec la base alimentaire et le ou les matériaux de fourrage, le procédé comprenant les étapes successives suivantes :
- formation, dans une première section de la filière, de l'enveloppe solide par refroidissement de la base alimentaire, cette première section étant traversée longitudinalement par au moins une canule de transfert du fourrage, une canule par matériau de fourrage, et débouchant dans une deuxième section de la filière, le début de la deuxième section étant défini par l'extrémité de sortie de la canule de plus faible longueur ;
- fourrage dans la deuxième section de la filière, de l'enveloppe solide formée dans la première section de la filière, avec le ou les matériaux de fourrage sortant de la ou des canules traversant la première section ;
- récupération du produit comprenant l'enveloppe externe remplie du ou des matériaux de fourrage, à la sortie de la filière.

La base alimentaire est typiquement protéique, et peut être polysaccharidique.

Selon un premier mode de réalisation, l'ériveloppe est formée dans la première section de la filière par refroidissement, typiquement par circulation d'eau ou autre fluide analogue.

On utilise selon une variante pour le matériau d'enveloppe des fromages naturels, des caillés frais, des spécialités fromagères non fondues.

On utilise selon une autre variante pour le matériau d'enveloppe des fromages fondus, des spécialités fromagères fondues avec ou sans sels fonte.

Selon une réalisation, le procédé comprend les étapes suivantes :
- préparation du fourrage et de l'enveloppe à une température voisine de 90°C dans les trémies d'alimentation ;
- refroidissement, à une température voisine de 80°C, du fourrage, et refroidissement, à une température voisine de 60°C, de l'enveloppe, entre les trémies d'alimentation et la tête de co-extrusion ;
- extrusion de l'enveloppe, avec refroidissement de la première section de la filière à une température voisine de 50°C, de manière à solidifier l'enveloppe ; extrusion du fourrage qui remplit l'enveloppe produite dans la première section, avec refroidissement de la deuxième section de la filière à une température voisine de 30°C, le produit sortant de la filière ayant une température voisine de 38°C.

On définit :
TE = température de l'enveloppe dans la trémie d'alimentation du système
TFn = température du fourrage n dans sa trémie d'alimentation
TFIL 1 = température moyenne de la paroi de la filière correspondant à la longueur L1
TFIL n = température moyenne de la paroi de la filière correspondant à la longueur Ln-(Ln-1)
TP1 = température moyenne du produit à la sortie de la canule 1
TPn = température moyenne du produit à la sortie de la canule n
TFILFIN = température moyenne de la paroi de la filière correspondant à la longueur L - Ln
TPFIN = température moyenne du produit à la sortie de la filière.

Selon une réalisation les températures dans le dispositif de coextrusion suivent la loi :
TE = TFn = TFIL1 = TFILn = TFLFIN = TP1 = TPn = TPFIN = 2-10°C.

Selon une autre réalisation, pour un processus dit « à chaud », l'enveloppe et le(s) fourrage(s) étant introduits entre 30 et 80°C, les températures dans le dispositif de coextrusion suivent la loi :
TE = Tfn = 30-80°C ; 80°C > TFIL 1 > TFIL n > TFILFIN = 30°C ; TP1 = TPn = TPFIN = 70 à 35°C.

Selon une autre réalisation, dans un processus dit « à haute température », », l'enveloppe et le(s) fourrage(s) étant introduits entre 90 et 100°C, les températures dans le dispositif de coextrusion suivent la loi:
TE = TFn = 90-100°C ; 80°C > TFIL 1 > TFILn > TFILFIN = 30°C ; TP1 = TPn = TPFIN = 85 à 35°C.

Selon un deuxième mode de réalisation, l'enveloppe est formée par chauffage, par coagulation thermique à une température supérieure à 50°C, typiquement entre 80 et 100°C.

On utilise par exemple dans ce mode de réalisation, pour le matériau d'enveloppe des produits composites à base de viande, d'oeuf, de chair de poisson, de surimi.

Selon une réalisation, le dispositif de coextrusion suit la loi :
TE = Tfn = 2-50°C ; TFIL 1 = TFILn = TFILFIN > 80-100°C ; TP 1 = TPn = TPFIN = 60-80°C à coeur.

Selon une autre réalisation le procédé comprend les étapes suivantes :
- préparation du fourrage à une température TFn voisine de 90°C et de l'enveloppe à une température TE voisine de 7°C dans les trémies d'alimentation;
- refroidissement entre les trémies d'alimentation et la tête de co-extrusion, à une température voisine de 75°C pour le fourrage, et à une température voisine de 4°C pour l'enveloppe;
- réchauffage à une température TFIL1 voisine de 45°C de la première section de la filière de manière à fluidifier l'enveloppe ;
- refroidissement à une température TFILFIN voisine de 25°C de la deuxième section de la filière, le fourrage étant introduit dans l'enveloppe à une température voisine de 50°C, le produit en sortie de filière ayant une température TP FIN voisine de 28°C.

Selon une réalisation, le procédé comprend les étapes suivantes :
- préparation du fourrage et de l'enveloppe à une température voisine de 4°C ;
- maintien à froid du fourrage à une température voisine de 4°C jusqu'à la tête de coextrusion, et en parallèle réchauffement de l'enveloppe à une température voisine de 50°C entre la trémie d'alimentation et la tête de coextrusion ;
- chauffage de la première section de la filière, à une température TFIL1 voisine de 98°C de manière à solidifier l'enveloppe par coagulation thermique ;
- chauffage de la deuxième section de la filière, le fourrage étant introduit dans l'enveloppe à une température TP1 voisine de 50°C ;

le produit sortant de la filière d'extrusion ayant une température voisine de 80°C.

On utilise typiquement dans le premier et le deuxième mode de réalisation pour le matériau de fourrage des produits composites à base de fromages, de viandes, d'oeufs, de chair de poissons, de surimi, de fruits, de légumes.

Par ailleurs, le matériau d'enveloppe a un extrait sec pouvant atteindre 60%, et typiquement de l'ordre de 30 à 50%.

Selon le procédé on alimente la tête de co-extrusion par deux pompes simples avec trémies de gavage, respectivement pour le matériau de fourrage, et pour le matériau de l'enveloppe.

Selon une réalisation on branche les pompes de transfert des trémies vers le coextrudeur, en direct sur le système de coextrusion.

Selon une autre réalisation on branche les pompes sur un système intermédiaire fermé muni d'un échangeur de chaleur, de manière à contrôler la température des matériaux juste avant leur entrée dans la tête de coextrusion.

Selon une réalisation, la pression et la répartition du flux de matière destinée à former l'enveloppe, sont régulées à l'aide d'une plaque de diffusion insérée sur le canal de l'enveloppe du produit.

Selon une réalisation on assemble plusieurs segments coextrudés, éventuellement avec un agent gélifiant, puis on les traite thenniquement de manière à obtenir un bloc reconstitué tranchable.

Typiquement le produit en sortie de filière est tranché puis conditionné, en continu ou en discontinu.

La vitesse linéaire d'écoulement du produit en sortie de filière est typiquement comprise entre 5 et 10mètres/minute.

Selon un deuxième aspect l'invention concerne un dispositif de coextrusion mettant en oeuvre le procédé décrit précédemment, le dispositif comprenant :
- des moyens d'alimentation du matériau de l'enveloppe du produit ;
- des moyens d'alimentation du matériau de fourrage du produit ;
- une chambre de coextrusion d'une tête de coextrusion prolongée par une filière de coextrusion ;
- des premiers moyens de transfert du matériau d'enveloppe jusque dans la chambre de coextrusion ;
- des seconds moyens de transfert du matériau de fourrage, jusqu'à la tête de coextrusion, sans mélange du matériau de fourrage et du matériau d'enveloppe;
- la filière de coextrusion longitudinale comprenant:
- une première section de filière, dans laquelle se déroule l'étape de formation de l'enveloppe solide, cette première section étant traversée par au moins une canule, la fin de la première section étant définie par l'extrémité de sortie de la canule de plus faible longueur, chaque canule transférant un matériau de fourrage, le matériau de l'enveloppe débouchant de la tête de coextrusion étant transféré entre la paroi interne de la filière et la paroi externe de la ou des canules;
- des moyens de refroidissement de ladite première section, destinés à solidifier l'enveloppe
- une deuxième section, à partir de la sortie de la canule ou des canules, jusqu'à la sortie de la filière, deuxième section dans laquelle se produit l'enrobage du fourrage sortant de la canule par l'enveloppe solide.

Les canules sont concentriques, la canule la plus périphérique étant la plus courte, ou non concentriques.

La longueur L1 de la canule la plus courte est d'au moins 10 cm pour que l'enveloppe se solidifie et typiquement de 30 à 150 cm, la différence entre la longueur L de la filière et la longueur Ln de la canule la plus longue étant d'au moins 10 cm et typiquement de 30 à 600 cm.

Le dispositif comprend des moyens de régulation de la température au niveau des premiers moyens de transfert, des moyens de régulation de la température au niveau des deuxièmes moyens de transfert, des moyens de régulation de la température de la première section de la filière, des moyens de régulation de la température de la seconde section de la filière.

La filière est typiquement de section circulaire, parallélépipédique, ou ludique.

La filière est en section transversale de forme identique ou différente de celle de la ou des canules. La filière a en section transversale un diamètre compris entre 5 et 50 mm, et de préférence 7 à 20 mm. Typiquement la section de la filière est comprise entre 1,2 et 5 fois la section de la canule.

Selon un troisième aspect l'invention concerne un produit alimentaire, de type spécialité alimentaire fourrée, obtenu en mettant en oeuvre le procédé décrit précédemment, le produit comprenant une enveloppe solide s'étendant longitudinalement, enrobant au moins un fourrage, le produit ayant en section transversale une dimension inférieure à 20mm et typiquement comprise entre 10 et 20 mm. Selon l'invention l'enveloppe solide est de composition fromagère et a un extrait sec compris entre 40 et 60%, le produit étant ainsi préhensible sans coller.

Sa section transversale est parallélépipédique, arrondie, ou de forme ludique.

Après tranchage sa longueur est comprise typiquement entre une et dix fois sa largeur en section transversale.

Le fourrage a une composition fromagère ou non fromagère choisie dans le groupe comprenant les pâtes charcutières, les pâtes à base de poissons ou autres produits de la mer, des fruits, des herbes, des épices et aromates.

Selon une réalisation le produit comprend au moins trois couches concentriques, l'enveloppe externe étant de composition fromagère.

Le produit alimentaire se présente selon une variante sous la forme d'un bloc reconstitué tranchabte obtenu par assemblage de plusieurs produits tels que décrits précédemment, ce produit reconstitué comportant une pluralité de canaux garnis de fourrage.

D'autres objets et avantages de l'invention apparaîtront au cours de la description qui va être faite en référence aux figures annexées dans lesquelles:

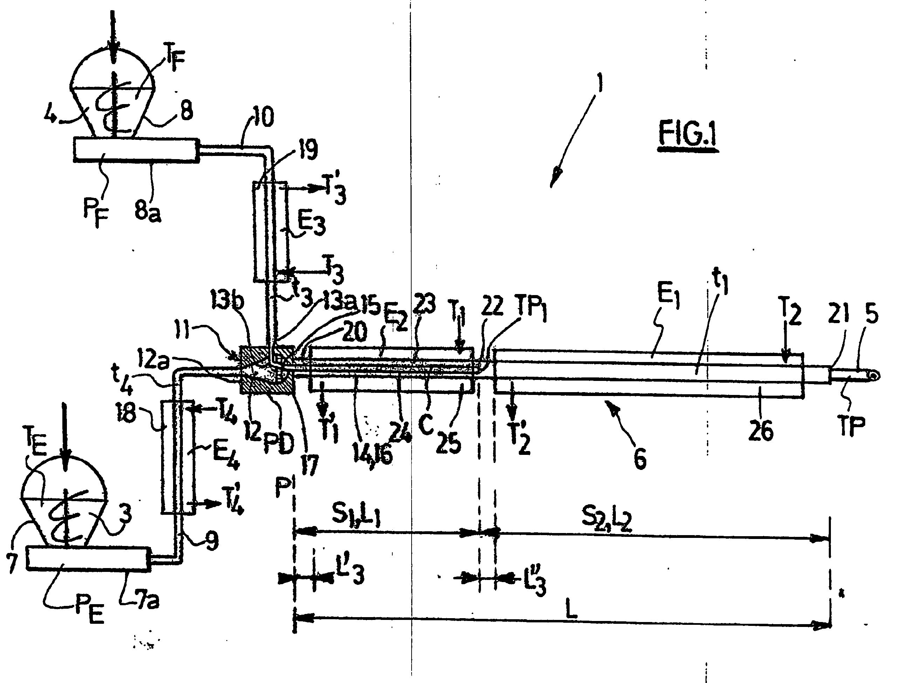

- la figure 1 est une vue schématique du dispositif de co-extrusion selon un mode de réalisation de l'invention utilisant une filière comprenant une canule de fourrage ;
- la figure 2 est une vue partielle schématique en agrandissement au niveau de la filière d'un dispositif de co-extrusion selon un autre mode de réalisation de l'invention, la filière comprenant trois canules de fourrages ;
- les figures 3a à 3o représentent quelques variantes de réalisation non limitatives de la forme générale de produits alimentaires conformes à l'invention, en coupe transversale, le matériau de fourrage n'étant pas représenté ;
- les figures 4a à 4f représentent quelques variantes de réalisation non limitatives de produits alimentaires conformes à l'invention, en coupe transversale, le matériau de fourrage interne et le matériau de l'enveloppe externe étant représentés respectivement en clair et en foncé, la filière comprenant une canule de fourrage, en faisant varier la forme de la filière et de la canule
- les figures 5a à 5c représentent quelques variantes de réalisation non limitatives de produits alimentaires conformes à l'invention, en coupe transversale, obtenus avec des canules de fourrage différentes pour une même filière, les canules étant centrées
- les figures 6a à 6g représentent quelques variantes de réalisation non limitatives de produits alimentaires conformes à l'invention, en coupe transversale, la filière comprenant plusieurs canules
- les figures 7a à 7c représentent quelques variantes de réalisation non limitatives de produits alimentaires conformes à l'invention, en coupe transversale, obtenus avec des canules de fourrage différentes pour une même filière, les canules étant décentrées
- les figures 8a à 8e représentent quelques variantes de réalisation non limitatives de produits alimentaires conformes à l'invention, illustrant différentes possibilités de tranchage ou pinçage des produits
- le tableau 1 représente les températures de fonctionnement en différentes zones du dispositif de co-extrusion selon l'invention, selon un mode de réalisation du type co-extrusion à chaud et selon deux modes de réalisation du type co-extrusion à froid.

On décrit un premier mode de réalisation de l'invention.

On utilise un dispositif 1 de coextrusion-permettant de fabriquer à partir d'un matériau d'enveloppe- 3 et d'un matériau de fourrage 4 un produit coextrudé 5, par coextrusion dans une filière de coextrusion 6.

Le matériau d'enveloppe 3 est introduit dans une trémie d'alimentation 7 d'un volume typiquement de l'ordre de 50 litres. Le matériau de fourrage 4 est introduit dans une trémie d'alimentation 8 d'un volume semblable.

Le matériau d'enveloppe est un matériau de type de base protéique fromagère.

Les trémies 7 et 8 comprennent des moyens de dosage de la quantité en sortie de ces trémie, et des moyens de régulation de la température du matériau d'enveloppe et du matériau de fourrage. Les trémies 7, 8 débouchent respectivement dans des bacs d'alimentation 7a, 8a.

Le matériau d'enveloppe 3 est conduit par des premiers moyens de transfert 9, en sortie du bac 7a, vers une tête de co-extrusion 11. De même le matériau de fourrage 4 est conduit par des seconds moyens de transfert 10 vers la tête de co-extrusion 11. Les premiers et seconds moyens de transfert 9, 10 sont des conduites à usage alimentaire. Le débit dans ces conduites est de l'ordre 50 à 100 Kg/h.

La tête de co-extrusion 11 comprend une chambre de coextrusion 12.

Les moyens de transfert 9 du matériau d'enveloppe débouchent dans la chambre 12 par une zone d'entrée 12a.

Les moyens de transfert 10 du fourrage débouchent dans la tête de co-extrusion au niveau d'une entrée 13.

La partie extrême 13a des moyens de transfert 10 est en communication étanche avec la partie extrême 13 b d'une canule 14.

Cette canule 14 comprend :
- une première partie 15, située dans la chambre 12 de la tête 11 ;
- une deuxième partie 16 à l'extérieur de la tête 11 donc dans la filière 6.

La canule 14 est maintenue à l'aide de moyens de maintien 17 dans la tête 11.

Le dispositif 1 comprend entre la trémie 7 et la tête 11, sur une portion du conduit de transfert 9 des moyens de régulation 18 de la température du matériau d'enveloppe.

Le dispositif 1 comprend également des moyens de régulation 19 de la température du matériau de fourrage, entre la trémie 8 et la tête 11.

On décrit maintenant plus précisément la filière 6 et la fabrication du produit 5 par coextrusion.

La filière 6 présente une première extrémité 20 en sortie de la tête de coextrusion 11, et une deuxième extrémité 21 où débouche le produit coextrudé.

La filière 6 comprend successivement une première section S1 d'une longueur L1, une deuxième section S2 de longueur L2. La longueur L1 est la longueur de la filière 6 à partir du plan P de l'extrémité 20.

Cette longueur L1 est la longueur de la filière 6 qui comprend la partie de la canule 14 située dans la filière 6. Sur cette longueur L1, le matériau de fourrage F empreinte la canule 14, jusqu'à l'extrémité 22 de cette canule 14.

Le matériau d'enveloppe circule dans la filière 6 entre la paroi interne 23 de la filière 6 et la paroi externe 24 de la canule 14.

Des moyens thermiques 25 sont prévus pour modifier la température du matériau d'enveloppe et du matériau de fourrage circulant dans la première section. Ces moyens thermiques 25 sont par exemple une double enveloppe, une résistance électrique, un bain d'huile ou d'autres fluides.

Pour des raisons notamment d'encombrement on peut ne pas placer de moyens thermiques 25 sur une longueur L4 en début de filière 6.

Sur la longueur L1, l'enveloppe du produit se forme par solidification comme cela sera décrit en détail par la suite.

La température fournie par les moyens thermiques 25 est T1, la température de sortie de ces moyens thermiques est T'1.

La filière 6 présente suite à la première section L1, la deuxième section de longueur L2 qui ne comprend plus de canule 14. Cette section L2 comprend des seconds moyens thermiques 26 analogues aux premiers moyens thermiques 25.

Selon une variante, on a L1=150 cm et L=400cm. Selon une autre variante on a L1=30cm et L=250cm.

La température fournie par ces moyens thermiques 26 est T2, la température en sortie de ces moyens thermiques 26 est T'2. La deuxième section L2 comprend une section S"3, entre les moyens thermiques 25 et les moyens thermiques 26. La première section S1 comprend une section S'3 de longueur L'3 entre la tête de coextrusion 11 et les moyens thermiques 25.

On a représenté sur le tableau 1 un exemple de réalisation précis du procédé selon l'invention selon deux modes de réalisation possibles.

Le tableau 1 indique :
- la température Tf du fourrage dans la trémie d'alimentation 8, les températures d'entrée T3 et de sortie T'3 des moyens thermiques 19, la température t3 du matériau de fourrage sortant de cette zone et arrivant la canule 14, la température TE du matériau d'enveloppe dans la trémie d'alimentation 7, les températures d'entrée T4 et de sortie T'4 des moyens de régulation 18, la température t4 du matériau d'enveloppe en sortie des moyens de régulations 18 et arrivant à la chambre de coextrusion 12;
- la température d'entrée T1 et de sortie T1 des premiers moyens thermiques 25, la température TP1 moyenne du produit juste à la sortie de la canule 14 ;
- la température d'entrée T2 et de sortie T'2 des seconds moyens de régulation thermiques 26, la température TP2 du produit dans la section L2.

Les matériaux d'enveloppe et de fourrage doivent pouvoir être transférés et pompés dans le système de coextrusion. Ils peuvent être introduits dans la trémie d'alimentation ainsi sous forme fluide à visqueuse, la viscosité devant être inférieure à des valeurs qui bloqueraient le dispositif, par exemple de l'ordre de 50 000 à 100 000 centipoises, voire même 1 000 000 centipoises, ceci avec une pression de pompage pouvant atteindre 20 à 50 bars.

Selon un premier mode de réalisation, le système de coextrusion est un système de coextrusion à chaud. Selon un second mode de réalisation, le procédé de coextrusion est un procédé de coextrusion à froid.

Concernant le matériau d'enveloppe, la coextrusion à chaud est destinée plus particulièrement à des spécialités fromagères fondues et des fromages fondus ainsi qu'à des spécialités fromagères non fondues et des fromages naturels.

Le matériau d'enveloppe initial est à une température TE de l'ordre de 90°C. Ce matériau est refroidi au niveau des moyens de transfert 9, puis successivement en sortie de filière, dans la première section S1 puis dans la deuxième section S2.

Ce matériau d'enveloppe est donc non thermocoagulable, mais plutôt thermofluidifiant.

La coextrusion à froid est destinée plus particulièrement à des matériaux alimentaires composites à base de viandes, charcuteries, poissons, surimi par exemple.

Le matériau d'enveloppe froid au niveau de la trémie 7, est maintenue froid dans les moyens de transfert 9, puis est réchauffé dans la section L1 de la filière.

Ce matériau est majoritairement thermocoagulabfe tel que des préparations à base de viandes, d'oeufs, de lactosérum de fromagerie, de chair de poissons, de surimi.

Dans la coextrusion à chaud comme dans la coextrusion à froid, la formation de l'enveloppe et du fourrage se fait de façon continue, mais décalée dans le temps : formation de l'enveloppe dans la section S1 puis formation du fourrage dans la section S2.

La canule 14 a par exemple un diamètre d=12mm et la filière 6 a un diamètre D=18mm.

Dans la coextrusion à chaud comme dans la coextrusion à froid, la composition des produits 5 peut mettre en oeuvre d'autres ingrédients secondaires et additifs destinés à améliorer la perception sensorielle du produit fini, sa machinabilité, sa conservation, son aspect extérieur notamment.

Ces ingrédients secondaires peuvent être des hydrocolloides alimentaires (amidons, amidons modifiés, gélatines, gommes, carraghénanes, ...), des protéines végétales ou animales (protéines de blé, de soja, ... protéines d'oeuf, de lactosérum, ...), des conservateurs (acides sorbiques, sorbates, nisine, nitrites, etc...), des arômes et épices, des matières grasses animales ou végétales (beurre, crème, MGLA, huile de colza, de tournesol, beurre de cacao, ...), des sels variés (sel fin, polyphosphates, chlorures de calcium, ...), des colorants (carmin de cochenille, rocou, paprika, ...) préparations sucrées (confiture de fait, confitures de fruits, confits de fruits, fruits secs, crème de marron, chocolat, caramel, nougat, céréales séchées et sucrées, ...), des extraits de fruits ou de légumes ainsi, que des graines séchées.

La géométrie du système de filière 6 et canule 14 peut être très variable.

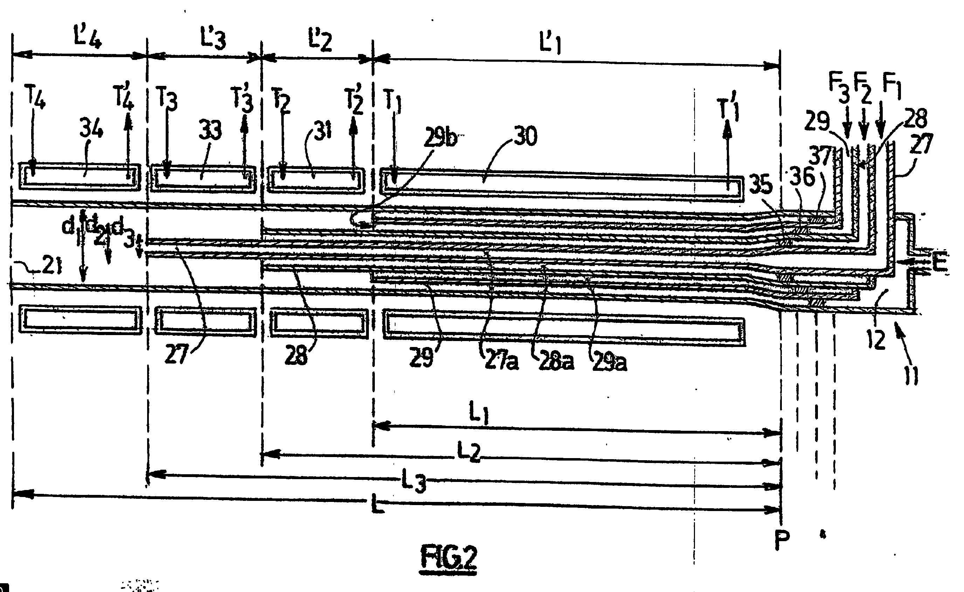

Selon un mode de réalisation, le coextrudeur comprend une filière 6, commune à plusieurs canules 14 (figure 2).

Le système de coextrusion comprend :
- une canule centrale 27, s'étendant sur une longueur L3 et comprenant un dispositif de fixation et de centrage 35 de cette canule 27 ;
- une canule 28 entourant la canule 27 sur une longueur L2 inférieure à L3, et comprenant un dispositif de fixation et de centrage 36 de cette canule 28 ;
- une canule 29 entourant les canules 27 et 28 sur une longueur L1 inférieure à L2, et comprenant un dispositif de fixation et de centrage 37 de cette canule 29. La canule 29 est la plus courte des trois et son extrémité 29b définit la fin de la première section S1.

Des moyens thermiques 30 fournissent une température T1 sur une longueur L'1 (sensiblement égale à L1), des moyens thermiques 31 fournissent une température T2 sur une longueur L'2 (sensiblement égale à L2-L1), des moyens thermiques 33 fournissent une température T3 sur une longueur L'3 (sensiblement égale à L3-L2), des moyens thermiques 34 fournissent une température T4 sur une longueur L'4.

L'épaisseur des parois des canules est par exemple de l'ordre de 1,5 mm. La longueur de la filière totale est L Selon une variante L1=30cm, L2=L3=40cm, L=140cm, et selon une autre variante L1=100cm, L2=L3=110cm, L=310cm. Les diamètres sont par exemple pour les sections L1, L2, L3 : di=17mm, d2=12mm, d3=6mm.

Les canules 27, 28, 29 sont concentriques et comprennent respectivement un premier fourrage 27a, un deuxième fourrage 28a, un troisième fourrage 29a, le fourrage 29a étant à la périphérie.

Le système de coextrusion peut comprendre en outre une plaque de diffusion associée aux dispositifs de centrage 35, 36, 37.

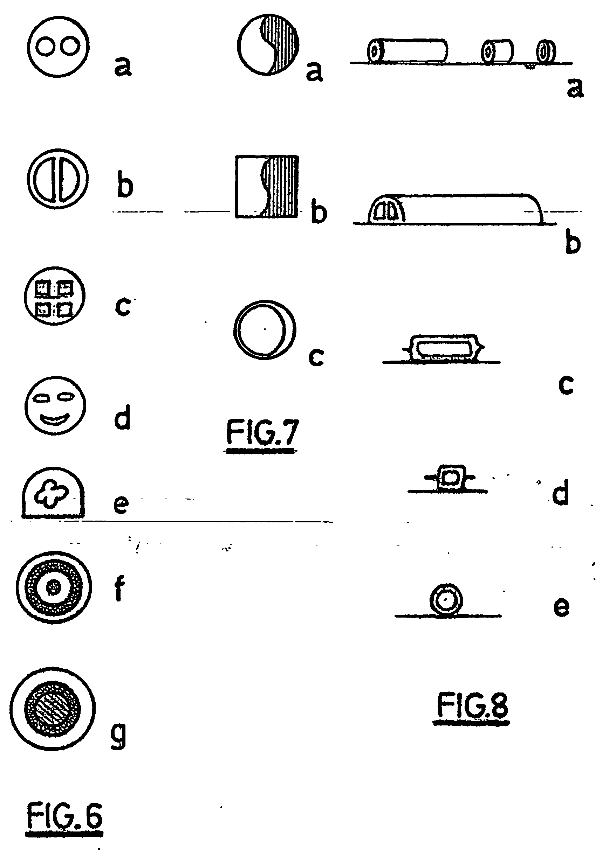

Le produit obtenus a en coupe transversale la forme représentée en figure 6f.

A partir des modes de réalisation précédemment décrits à une canule et à trois canules, on comprend que grâce au système de coextrusion utilisé, de très nombreuses géométries sont possibles pour donner sa forme au produit fini.

Les contraintes principales sont celle de l'usinage des pièces, si elles sont métalliques par exemple. Toutefois, on peut utiliser des pièces en matériaux composites plus faciles à usiner ou à souder, tels que des polymères ou des résines plastiques pour former les canules ou des éléments du corps de la tête de coextrusion (plaque de diffusion par exemple).

Généralement, les filières et les canules sont de même géométrie dans le même sens de la longueur, mais dans certaines variantes de réalisation, il est possible de les profiler. L'aval de la filière ou de la canule est alors plus large que l'amont. Cette configuration permet d'augmenter l'effet de coextrusion à l'orifice sortie de la canule ou de la filière. Une telle réduction du diamètre interne de la filière ou de la canule provoque une augmentation de la pression de la masse alimentaire en mouvement, et donc souvent une accélération des flux de matière en sortie d'orifice.

Les dispositifs de fixation et de centrage de canule, tels que les dispositifs 35, 36, 36 de chaque canule 27, 28, 29 sont montés sur une rotule métallique, ce qui permet de centrer, ou de décentrer la ou les canule(s), et donc d'obtenir des formes originales notamment ludiques. Une plaque de diffusion est positionnée au niveau des rotules pour régulariser l'écoulement des matières alimentaires constituant l'enveloppe et les fourrages d'un niveau n+1. Le produit circulant dans la canule centrale ne passe pas au travers d'une telle plaque.

La figure 3 représente plusieurs variantes de réalisation illustrant des produits de formes très différentes selon la ou les canules utilisées.

La figure 3 représente schématiquement une forme générale du produit coextrudé rond (3a), carré (3b), triangle (3c), carreau (3d) ou coeur, (3e), rectangle (3f), ovale (3g), triangle arrondi (3h), orthogonale (3i), pince (3j), nugget (3k), pyramide (31), tunnel (3m), arbre (3n), fleur (3o).

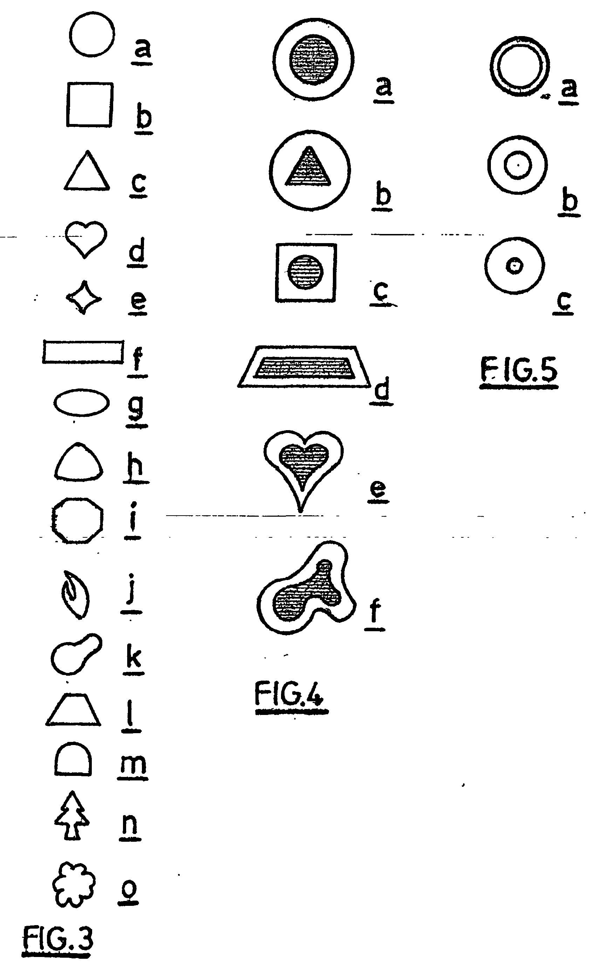

Les figures 4 à 4f représentent pour certaines de ces formes le produit coextrudé comprenant l'enveloppe externe et le fourrage interne. Par exemple, pour la figure 4c, la filière est de section carrée et la canule interne de section circulaire.

Les figures 5a, 5b, 5c représentent des produits obtenus à partir de différents ratios canule/filière. Le ratio du diamètre de la canule sur le diamètre de la filière est nettement plus élevé pour la figure 5a.

Les figures 6a à 6g représentent des produits obtenus à partir d'une filière commune à plusieurs canules. Les fourrages sont distincts les uns des autres dans les figures 6a à 6d, et fusionnent pour la figure 6e. Une forme ludique est obtenue sur la figure 6d représentant un visage.

Les figures 7a et 7b représentent des produits obtenus à l'aide d'une canule décentrée, la figure 7c représente un produit obtenu à l'aide d'une canule décentrée en éclipse.

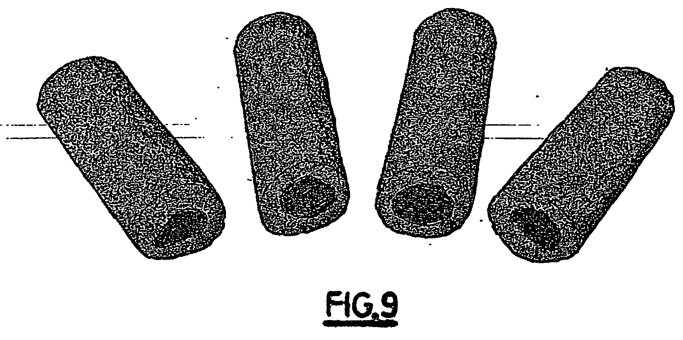

En sortie de filière, le tranchage à différentes longueurs ainsi que d'autres traitements mécaniques peuvent donner des formes très différentes du produit. Par exemple la figure 8a illustre des bouchées, les figures 8b et 9 représente un produit en forme de bûche, les figures 8c, 8d représentent des produits fermés pincés, la figure 8e représente un produit en boule.

Grâce au procédé décrit, on peut obtenir l'ensemble de ces formes de produits pour des produits de faibles dimensions, notamment d'un diamètre inférieur à 20 mm. Le procédé permet également la fabrication de produits de diamètre élevé par exemple 50 à 100 mm. Les dimensions du produit sont déterminées par les dimensions de la filière et de la ou des canules.

Dans les procédés de l'art antérieur, qui n'utilisent pas de longue canule interne à la filière, la fabrication de produits de diamètre inférieurs à environ 20 mm rend complexe le montage et démontage du système de co-extrusion, d'où un coût de fabrication nettement supérieur.

On décrit maintenant plus précisément la composition du matériau d'enveloppe et du matériau de fourrage.

Selon une réalisation, la composition du produit co-extrudé est analogue à celle de spécialités fromagères décrites dans le document EP A 260 194.

Le matériau d'enveloppe est obtenu à partir de fromages de base désignés F1 affinés ayant au moins 50% de matière sèche, et plus spécialement à partir de fromages à pâte pressée cuite ou non, les fromages fondus étant exclus.

Le taux de gras sur sec est, par exemple de l'ordre de ou supérieur à 25%. Un tel fromage n'est pas soumis à synérèse. Des fromages donnant de bons résultats sont notamment des fromages de Hollande (Gouda, Edam, Mimolette, Leerdarmeur), ou des fromages à pâte pressée (Saint-Paulin, Emmenthal, Comté, Cheddar).

A ce fromage de base F1 à traiter, sont additionnés des protéines spécifiques notamment de lactosérum. Ces protéines sont additionnées lorsque ce fromage, est à une température comprise entre 40°C et 80°C.

Le fromage désigné F2 ainsi obtenu par adjonction (directe ou indirecte) au fromage de base F1 utilisé de protéines, notamment de lactosérum, avant d'amener le fromage à une température de l'ordre de 80°C, permet de conférer à ce fromage obtenu une machinabilité permettant son traitement mécanique ultérieur, notamment pour le procédé de coextrusion selon l'invention.

Le matériau de fourrage peut faire l'objet de nombreuses variantes de réalisation en fonction du produit alimentaire final que l'on souhaite obtenir. Il peut s'agir d'un produit à base notamment de fromage ou à base de charcuterie, ou de pâtisserie, ou de confiserie. Le fourrage peut être homogène, plus ou moins solide ou mou voire plus ou moins liquide. Le fourrage peut être hétérogène et comporter des morceaux inclus tels que : fruits, fruits de mer, légumes, jambon, champignons, fromage notamment

Par exemple, le fromage utilisé pour l'enveloppe est du gouda jeune dont l'extrait sec est de 59% et le taux de gras sec de 51,5%. Le fromage est réduit en petits morceaux. Des protéines de lactosérum dans un dosage de 10% en poids sont ajoutées au fromage et l'ensemble est mélangé et amené à 8°C par un chauffage pendant 13 minutes, pour former une masse homogène. Cette masse est introduite dans la première trémie d'alimentation 7 du dispositif de coextrusion 1. Le fourrage est constitué de fromage frais double crème dont l'extrait sec est de 44% et le taux de gras sur sec de 70%. Le fourrage est introduit à 73°C environ dans la seconde trémie 8 de la machine. Le passage en machine permet de réaliser un produit comportant jusqu'à 65% en poids de garniture (correspondant à la forme générale de la figure 2).

On présente maintenant quelques exemples de formulations élaborées. Les exemples 1, 2, 3, 5 suivants sont obtenus avec un système de co-extrusion à chaud. Les exemples 4, 6 suivants sont obtenus avec un système de co-extrusion à froid.

Exemple 1 : co-extrudé fromage (enveloppe) + préparation de fruits (fourrage). Une enveloppe constituée de fromage fondu à 53% d'extrait sec et 53% de matière grasse sur extrait sec est préparée par mélange à 90°C dans un pétrin à partir de cheddar jeune, de beurre, d'eau, d'amidon, de sels de fonte, de gélatine, de carraghénane et d'arômes. Un fourrage aux fruits est préparé par mélange à 70°C d'une confiture de fraises avec morceaux, d'eau, d'amidon, de gélatine, de saccharose, de fructose et d'arômes. La teneur en eau et l'activité de l'eau de l'eau du fourrage sont ajustées pour être compatibles à celles du fromage fondu.

Exemple 2 : co-extrudé spécialité fromagère (enveloppe) + fromage naturel (fourrage) + coulis de fruits (fourrage).
L'enveloppe est constituée cette fois d'un mélange à 45°C dans un pétrin d'Edam, de caillé lactique, de gélatine (à l'exclusion de sels de fonte). Le premier fourrage est constitué d'un caillé lactique double crème à 45% d'extrait sec et 72% de matière grasse sur extrait sec. Il est préparé à froid par mélange. Le second fourrage est préparé à partir d'une pulpe de fruit congelée à laquelle on a additionné du sucre, de l'amidon, du colorant rouge, un arôme et des hydrocolloïdes alimentaires. La teneur en eau et l'activité de l'eau des deux fourrages sont ajustées pour être compatibles avec celles du fromage fondu.

Exemple 3 : co-extrudé fromage naturel + préparation de légumes verts. L'enveloppe est constituée d'un fromage naturel type gouda jeune. Un fourrage de légumes est préparé à partir d'une purée de légumes fraîche à laquelle on a additionné de l'amidon, des fibres végétales, du sel de la fécule de pomme de terre, du sorbitol, un colorant et un arôme spécifique. La teneur en eau et l'activité de l'eau du fourrage sont ajustées pour être compatibles avec celles du fromage naturel.

### Exemple 4 : co-extrudé surimi + mousse de saumon.

Une enveloppe de surimi est préparée à froid dans un cutter à partir de surimi de poisson, de pulpe de poisson, d'extrait de crustacé, d'eau, de blanc d'oeuf liquide, de fécule de pomme de terre, d'amidon de blé, d'huile d'arômes. Le fourrage est une mousse de saumon préparée au cutter à froid également à partir de filet de saumon, de pulpe de poisson blanc d'huile, de fécule de pomme de terre, de crème fraîche, de blanc d'oeuf liquide, de sel, d'arôme et de colorant.

### Exemple 5: co-extrudé pâte boulangère + fromage fondu.

L'enveloppe est constituée d'une pâte boulangère type pâte à choux préparée au pétrin de boulanger. Le fourrage est un fromage fondu tel que décrit dans l'exemple 1 mais pour lequel la teneur en eau et l'activité de l'eau ont été modifiées pour être compatibles avec celles de la pâte boulangère après cuisson. L'ensemble est passé au four à 240°C après co-extrusion.

### Exemple 6 : co-extrudé pâte boulangère + préparation de viande.

L'enveloppe est constituée-d'une pâte boulangère type génoise préparée de manière traditionnelle. Le fourrage est une préparation charcutière de type mousse de canard traditionnelle excepté que la teneur en eau et l'activité de l'eau de la mousse de canard ont été corrigées de façon à être compatibles avec cette de la génoise après cuisson.

Grâce au procédé selon l'invention, les produits obtenus sont préhensibles. Contrairement aux produits obtenus par les procédés de l'art antérieur, le produit en sortie de filière a sa structure « finie ». N'étant pas pâteux, il n'adhère pas, il est agréable au toucher même pour de petites pièces tels que des batonnets.

On a décrit précédemment un mode de réalisation utilisant une canule et un autre mode avec trois canules. On présente maintenant certains principes à utiliser pour définir les principaux paramètres du système de coextrusion notamment les longueurs des filières et des canules.

Le système diffère nettement de l'art antérieur pour une longueur L1 de la canule la plus courte, d'au moins 10 cm, L1 étant la longueur de la canule la plus périphérique pour les canules concentriques à l'intérieur de la filière de co-extrusion.

En pratique courante, cette longueur L1 est plus souvent entre 30 et 150 cm de long, ce qui permet la formation optimale de l'enveloppe extérieure.

Si L2, L3, ... Ln correspondent aux longueur des canules supplémentaires dans le cas de co-extrusion multiple, L2, L3, ...ou Ln peuvent être égales à L1, mais le plus souvent, L2 = L1 + x cm, L3 = L2 + x cm, ..., L(n-1) + x cm, avec x compris entre 0 et 30 cm.

La longueur L de la filière est toujours supérieure à la longueur de la canule la plus périphérique (L1, L2, L3, ... Ln selon le cas). La différence L-Ln est d'au moins égale à 10 cm, mais dans les cas plus fréquents d'au moins 30 à 600 cm. Une telle longueur, au cours de laquelle s'effectue un échange thermique important, est nécessaire pour refroidir ou chauffer à coeur les différents éléments co-extrudés.

On a par exemple
- pour une filière à une canule (décrite précédemment)
   L1 = 150cm avec L = 400 cm
   L1 = 30 cm avec L = 250 cm
- pour une filière à trois fourrages (décrite précédemment) :
   L1 = 30 cm, L2 = L3 = 40 cm et L =140 cm
   L1 =100 cm, L2 = L3 = 110 cm et L = 310 cm
- pour une filière à deux fourrages :
   L1 = 30 cm ; L2=60 cm et L=4m
   L1 = 10 cm ; L2 = 20 cm et L = 80 cm

Concernant les températures du système, on définit :
TE = température de l'enveloppe dans la trémie d'alimentation du système
TFn = température du fourrage n dans sa trémie d'alimentation
TFIL 1 = température moyenne de la paroi de la filière correspondant à la longueur L1
TFIL n = température moyenne de la paroi de la filière correspondant à la longueur Ln - (L n-1)
TP1 = température moyenne du produit à la sortie de la canule 1
TPn = température moyenne du produit à la sortie de la canule n
TFILFIN = température moyenne de la paroi de la filière correspondant à la longueur L - Ln
TPFIN = température moyenne du produit à la sortie de la filière.

A partir de ces définitions, plusieurs configurations de profils de température sont possibles selon que :
- le produit est thermocoagulable ou non ;
- le produit provient d'un processus de fabrication à chaud ou à froid ;
- la nécessité de maintenir une hygiène à l'ensemble du processus de fabrication dont la co-extrusion._______________

Dans des modes de réalisations utilisant comme matériau d'enveloppe des fromages ou des spécialités fromagères ou des fromages fondus ou des spécialités fromagères fondues il est possible de travailler "tout à froide en mode réfrigéré, mais le plus souvent, on privilégiera un processus dit "à chaud", voire même "à haute température".

Pour un tel processus "tout à froid", par rapport aux machines « Rhéon » ou « VEMAG », la formation de l'enveloppe indépendamment permet d'obtenir une texture de l'enveloppe externe plus ferme, plus lisse et plus homogène. Dans ce cas, TE = TFn = TFIL1 = TFILn = TFLFIN = TP1 = TPn = TPFIN = 2-10°C. Un système réfrigérant permet de garantir ces températures.

Pour un tel processus "à chaud", l'enveloppe et le (les) fourrage(s) sont introduits dans l'équipement entre 30 et 80°C. Ces températures permettent de garantir une fluidité optimale des mélanges alimentaires. Les zones de régulation situées le long de la filière permettent de contrôler l'écoulement de la solidification du produit fini. Dans ce cas, TE = TFn = 30-80°C ; 80°C > TFIL 1 > TFIL n > TFILFIN = 30°C ; TP1 = TPn = TPFIN = 70 à 35°C.

Pour un tel processus "à haute température", le processus est paramétré pour avoir une garantie hygiénique très poussée. En général, l'enveloppe et le (les) fourrages sont à une température comprise entre 90 et 100°C. Dans le cas ultime d'un fromage fondu UHT par exemple, la trémie d'alimentation peut être portée à des températures supérieures à 100°C.
Dans ce cas, TE = TFn = 90-100°C ; 80°C > TFIL 1 > TFILn > TFILFIN = 30°C ; TP1 = TPn = TPFIN = 85 à 35°C.

Dans les modes de réalisation utilisant des enveloppes à base de surimi ou de préparations de viandes, il s'agit essentiellement de systèmes thermocoagulables, il convient donc d'alimenter l'ensemble à une température relativement basse, comprise entre 2 et 50°C, de préférence inférieure à 15°C. Les températures sont donc TE = TFn = 2-50°C ; TFIL 1 = TFILn = TFILFIN > 80-100°C ; TP 1 = TPn = TPFIN = 60-80°C à coeur. Dans ce dernier cas des températures supérieures à 100°C peuvent être atteintes à l'aide d'une double enveloppe dans laquelle circule de l'huile ou un autre fluide de type glycol.

Le pré-refroidissement ou le pré-chauffage de l'enveloppe ou des fourrages avant d'atteindre la tête de coextrusion sont réalisés dans les cas où les différences de températures sont trop fortes. Dans ce cas, les températures sont ramenées dans des plages plus compatibles pour le processus de solidification dans la filière.

Dans la description faite on comprend qu'une grande diversité de produits peut être obtenue, et à débit élevé typiquement en continu. Alors que dans l'art antérieur, de tels débits pouvant atteindre 10 mètres/minute sont difficiles à atteindre pour de petites pièces. De plus en aval de la filière, le produit coextrudé étant non collant, il peut être tranché facilement. On utilise par exemple un système rotatif à lames, une découpe au fil, au jet d'eau, aux ultrasons.

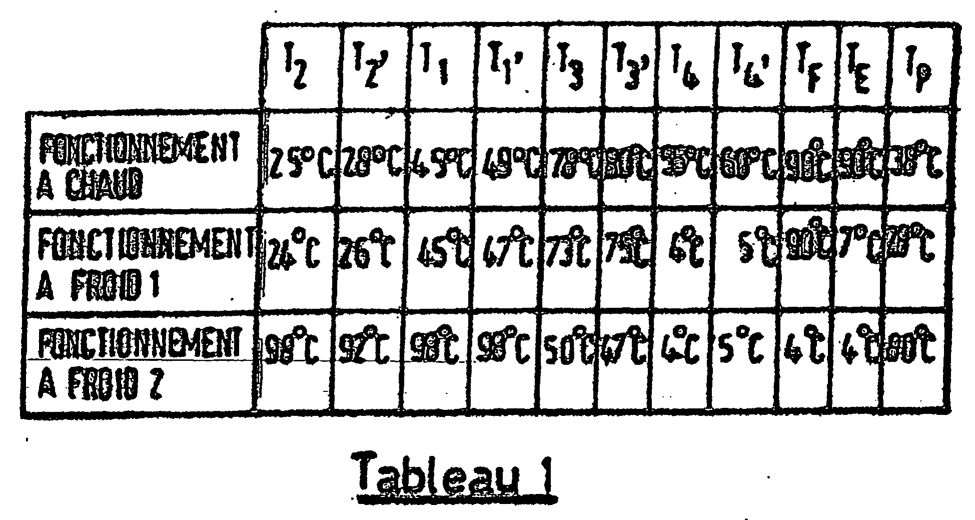

## Revendications

1. Procédé destiné à la fabrication d'un produit alimentaire (5) comprenant une enveloppe solide enrobant au moins un fourrage, à partir d'une base alimentaire (3) destinée à former l'enveloppe du produit et d'au moins un maténau alimentaire de fourrage (4), dans un dispositif de coextrusion (1) comprenant une filière de coextrusion (6) alimentée avec la base alimentaire et le ou les matériaux de fourrage, **caractérisé en ce qu'**il comprend les étapes successives suivantes :
- formation dans une première section (S1) de la filière (6), de l'enveloppe solide par refroidissement de la base alimentaire, cette première section étant traversée longitudinalement par au moins une canule (14) de transfert du fourrage, une canule par matériau de fourrage, et débouchant dans une deuxième section (S2) de la filière (6), le début de la deuxième section étant défini par l'extrémité (22) de sortie de la canule de plus faible longueur (L1) ;
- fourrage dans la deuxième section (S2) de la filière, de l'enveloppe solide formée dans la première partie de la filière avec le ou les matériaux de fourrage sortant de la ou des canules (14,27,28,29) traversant la première section ;
- récupération du produit comprenant l'enveloppe externe remplie du ou des matériaux de fourrage, à la sortie (21) de la filière.

2. Procédé selon la revendication 1, **caractérisé en ce que** l'enveloppe est formée, dans la première section dé la filière, par refroidissement, typiquement par circulation d'eau ou autre fluide analogue.

3. Procédé selon la revendication 2, **caractérisé en ce que** l'on utilise pour le matériau d'enveloppe des fromages naturels, des caillés frais, des spécialités fromagères non fondues.

4. Procédé selon la revendication 2, **caractérisé en ce que** l'on utilise pour le matériau d'enveloppe des fromages fondus, des spécialités fromagères fondues avec ou sans sels fonte.

5. Procédé selon l'une quelconque des revendications 2 à 4, **caractérisé en ce qu'**il comprend les étapes suivantes :
- préparation du fourrage et de l'enveloppe à une température voisine de 90°C dans les trémies d'alimentation (7,8) ;
- refroidissement, à une température voisine de 80°C, du fourrage, et refroidissement, à une température voisine de 60°C, de l'enveloppe, entre les trémies d'alimentation (7,8) et la tête de co-extrusion (11) ;
- extrusion de l'enveloppe, avec refroidissement de la première section de la filière à une température voisine de 50°C, de manière à solidifier l'enveloppe ;
- extrusion du fourrage qui remplit l'enveloppe produite dans la première section, avec refroidissement de la deuxième section (S2) de la filière à une température voisine de 30°C, le produit sortant de la filière ayant une température voisine de 38°C.

6. Procédé selon la revendication 3 ou 4, **caractérisé en ce que** en les températures dans le dispositif de coextrusion suivent la loi :
TE = TFn = TFIL1 = TFILn = TFLFIN = TP1 = TPn = TPFIN = 2-10°C, ces températures étant définies de la manière suivante :
TE = température de l'enveloppe dans la trémie d'alimentation du système
TFn = température du fourrage n dans sa trémie d'alimentation
TFIL 1 = température moyenne de la paroi de la filière correspondant à la longueur L1
TFIL n = température moyenne de la paroi de la filière correspondant à la longueur Ln - (L n-1)
TP1 = température moyenne du produit à la sortie de la canule 1
TPn = température moyenne du produit à la sortie de la canule n
TFILFIN = température moyenne de la paroi de la filière correspondant à la longueur L - Ln
TPFIN = température moyenne du produit à la sortie de la filière.

7. Procédé selon la revendication 3 ou 4, **caractérisé en ce que** les températures dans le dispositif de coextrusion suivent la loi :
TE = TFn = 30-80°C ; 80°C > TFIL 1 > TFIL n > TFILFIN = 30°C ; TP1 = TPn = TPFIN = 70 à 35°C.

8. Procédé selon la revendication 3 ou 4, **caractérisé en ce que** les températures dans le dispositif de coextrusion suivent la loi :
TE = TFn = 90-100°C ; 80°C > TFIL 1 > TFILn > TFILFIN = 30°C ; TP1 = TPn = TPFIN = 85 à 35°C.

9. Procédé selon l'une quelconque des revendications 1 à 8, **caractérisé en ce que** l'on utilise pour le matériau de fourrage des produits composites à base de fromages, de viandes, d'oeufs, de chair de poissons, de surimi, de fruits, de légumes.

10. Procédé selon l'une quelconque des revendications 1 à 9, **caractérisé en ce que** le matériau d'enveloppe a un extrait sec pouvant atteindre 60%, et typiquement de l'ordre de 30 à 50%.

11. Procédé selon l'une quelconque des revendications 1 à 10, **caractérisé en ce que** l'on alimente la tête de co-extrusion par deux pompes simples avec trémies de gavage, respectivement pour le matériau de fourrage, et pour le matériau de l'enveloppe.

12. Procédé selon la revendication 11, **caractérisé en ce que** l'on branche les pompes de transfert des trémies vers la tête de coextrusion (11), en direct sur le système de coextrusion.

13. Procédé selon la revendication 11, **caractérisé en ce que** l'on branche les pompes sur un système intermédiaire fermé muni d'un échangeur de chaleur, de manière à contrôler la température des matériaux juste avant leur entrée dans la tête de coextrusion.

14. Procédé selon l'une quelconque des revendications 1 à 13, **caractérisé en ce que** la pression et la répartition du flux de matière destinée à former l'enveloppe, sont régulées à l'aide d'une plaque de diffusion insérée sur le canal de l'enveloppe du produit

15. Procédé selon l'une quelconque des revendications 1 à 13, **caractérisé en ce que** l'on assemble plusieurs segments coextrudés, éventuellement avec un agent gélifiant, puis on les traite thermiquement de manière à obtenir un bloc reconstitué tranchable.

16. Procédé selon l'une quelconque des revendications 1 à 15, **caractérisé en ce que** le produit en sortie de filière est tranché puis conditionné, en continu ou en discontinu.

17. Procédé selon l'une quelconque des revendications 1 à 16, **caractérisé en ce que** la vitesse linéaire d'écoulement en sortie de filière est de l'ordre de 5 à 10 mètres/minute.

18. Dispositif de coextrusion en mettant en oeuvre le procédé selon l'une des quelconques des revendications 1 à 17, **caractérisé en ce qu'**il comprend :
- des moyens d'alimentation (7) du matériau de l'enveloppe du produit ;
- des moyens d'alimentation (8) du matériau de fourrage du produit ;
- une chambre de coextrusion (12) débouchant d'une tête de coextrusion (11) prolongée par une filière de coextrusion (6) ;
- des premiers moyens de transfert (9) du matériau d'enveloppe jusque dans la chambre de coextrusion ;
- des seconds moyens de transfert (10) du matériau de fourrage, jusqu'à la tête de coextrusion, sans mélange du matériau de fourrage et du matériau d'enveloppe;
- la filière de coextrusion longitudinale comprenant:
- une première section de filière, dans laquelle se déroule l'étape de formation de l'enveloppe solide, cette première section étant traversée par au moins une canule (14), la fin de la première section étant définie par l'extrémité de sortie (22) de la canule (29) de plus faible longueur (L1), chaque canule transférant un matériau de fourrage sortant de la tête de coextrusion, le matériau de l'enveloppe débouchant de la tête de coextrusion étant transféré entre la paroi interne (23) de la filière et la paroi externe (24) de la ou des canules ;
- des moyens de refroidissement de ladite première section, destinés à solidifier l'enveloppe ;
- une deuxième section, à partir de la sortie de la canule ou des canules, jusqu'à la sortie de la filière, deuxième section dans laquelle se produit l'enrobage du fourrage sortant de la canule par l'enveloppe solide.

19. Dispositif selon la revendication 18 **caractérisé en ce que** les canules sont concentriques, la canule la plus périphérique étant la plus courte, ou non concentriques.

20. Dispositif selon la revendication 18 ou 19 **caractérisé en ce que** la longueur L1 de la canule la plus courte est d'au moins 10 cm pour que l'enveloppe se solidifie et typiquement de 30 à 150 cm, la différence entre la longueur L de la filière et la longueur Ln de la canule la plus longue étant d'au moins 10 cm et typiquement de 30 à 600 cm.

21. Dispositif selon l'une quelconque des revendications 18 à 20, **caractérisé en ce qu'**il comprend des moyens de régulation de la température au niveau des premiers moyens de transfert, des moyens de régulation de la température au niveau des deuxièmes moyens de transfert, des moyens de régulation de la température de la première section de la filière, des moyens de régulation de la température da la seconde section de la filière.

22. Dispositif selon l'une quelconque des revendications 18 à 21 **caractérisé en ce que** la filière est de section circulaire, parallélépipédique, ou ludique.

23. Dispositif selon l'une quelconque des revendications 18 à 22 **caractérisé en ce que** la filière est en section transversale de forme identique ou différente de celle de la ou des canules

24. Dispositif selon l'une quelconque des revendications 18 à 23 **caractérisé en ce que** la filière a en section transversale un diamètre compris entre 5 et 50 mm, et de préférence 7 à 20 mm.

25. Dispositif selon l'une quelconque des revendications 18 à 24 **caractérisé ce que** la section de la filière est comprise entre 1,2 et 5 fois la section de canule.

26. Produit alimentaire, de type spécialité alimentaire fourrée, obtenu en mettant en oeuvre le procédé conforme à l'une quelconque des revendications 1 à 17, comprenant une enveloppe solide s'étendant longitudinalement, enrobant au moins un fourrage, le produit ayant en section transversale une dimension inférieure à 20mm et typiquement comprise entre 10 et 20 mm, **caracterisé en ce que** l'enveloppe solide est de composition fromagère et a un extrait sec compris entre 40 et 60%, le produit étant ainsi préhensible sans coller.

27. Produit selon la revendication 26, **caractérisé en ce que** sa section transversale est parallélépipédique, arrondie, ou de forme ludique.

28. Produit selon la revendication 26 ou 27, **caractérisé en ce que** après tranchage sa longueur est comprise entre 1 et 10 fois sa largeur en section transversale.

29. Produit selon l'une quelconque des revendications 26 à 28, **caractérisé en ce que** le fourrage a une composition fromagère ou non fromagère choisie dans le groupe comprenant les pâtes charcutières, les pâtes à base de poissons ou autres produits de la mer, des herbes, des épices et aromates.

30. Produit selon l'une quelconque des revendications 26 à 29, **caractérisé en ce qu'**il comprend au moins trois couches concentriques, l'enveloppe externe étant de composition fromagère,

31. Produit alimentaire, **caractérisé en ce qu'**il se présente sous la forme d'un bloc reconstitué tranchable obtenu par assemblage de plusieurs produits selon l'une quelconque des revendications 26 à 30, ce produit reconstitué comportant une pluralité de canaux gamis de fourrage.

## Patentansprüche

1. Zur Herstellung eines Lebensmittelprodukts (5) bestimmtes Verfahren mit einer wenigstens eine Füllung umfassenden festen Ummantelung, ausgehend von einer zur Bildung der Ummantelung des Produkts bestimmten Lebensmittelbasis (3) und wenigstens einem Lebensmittelfüllmaterial (4) in einer Koextrusionsvorrichtung (1) mit einem mit der Lebensmittelbasis und dem oder den Füllmaterial(ein) versorgten Koextrusionsspritzmundstück (6), **dadurch gekennzeichnet, dass** es die folgenden aufeinander folgenden Stufen umfasst:
- in einem ersten Abschnitt (S1) des Spritzmundstücks (6) Bildung der verfestigenden Ummantelung durch Abkühlen der Lebensmittelbasis, wobei dieser erste Abschnitt in Längsrichtung durch wenigstens eine Transferkanüle (14) der Füllung, eine Kanüle pro Füllmaterial, durchquert wird und in einem zweiten Abschnitt (S2) des Spritzmundstücks (6) mündet, wobei der Anfang des zweiten Abschnitts durch das Ausgangsende (22) der Kanüle der kürzesten Länge (L1) definiert wird;
- Füllung im zweiten Abschnitt (S2) des Spritzmundstücks der im ersten Teil des Spritzmundstücks mit dem oder den aus der oder den den ersten Abschnitt durchquerenden Kanüle(n) (14, 27, 28, 29) austretenden Füllmaterial(ein) gebildeten festen Ummantelung;
- Auffangen des die mit dem oder den Füllmaterial(ein) gefüllten externe Ummantelung umfassenden Produkts am Ausgang (21) des Spritzmundstücks.

2. Verfahren gemäß Anspruch 1, **dadurch gekennzeichnet, dass** die Ummantelung im ersten Abschnitt des Spritzmundstücks durch Abkühlen, typischerweise durch Zirkulation von Wasser oder einem anderen, analogen Fluid gebildet wird.

3. Verfahren gemäß Anspruch 2, **dadurch gekennzeichnet, dass** man bei dem Ummantelungsmaterial natürliche Käsesorten, frische Dickmilch, nicht geschmolzene Käsespezialitäten verwendet.

4. Verfahren gemäß Anspruch 2, **dadurch gekennzeichnet, dass** man bei dem Ummantelungsmaterial Schmelzkäsesorten, Schmelzkäsesorten mit oder ohne Schmelzsalz verwendet.

5. Verfahren gemäß Beispiel 2 bis 4, **dadurch gekennzeichnet, dass** es die folgenden Stufen umfasst:
- Zubereitung der Füllung und der Ummantelung bei einer Temperatur von rund 90°C in den Versorgungstrichtern (7, 8);
- Abkühlen der Füllung bei einer Temperatur von rund 80°C und Abkühlen der Ummantelung bei einer Temperatur von rund 60°C zwischen den Versorgungstrichtern (7, 8) und dem Koextrusionskopf (11);
- Extrusion der Ummantelung mit Abkühlen des ersten Abschnitts des Spritzmundstücks bei einer Temperatur von rund 50°C, so dass die Ummantelung verfestigt wird;
- Extrusion der Füllung, die die im ersten Abschnitt hergestellte Ummantelung füllt, mit Abkühlen des zweiten Abschnitts (S2) des Spritzmundstücks bei einer Temperatur von rund 30°C, wobei das aus dem Spritzmundstück austretende Produkt eine Temperatur von rund 38°C hat.

6. Verfahren gemäß Anspruch 3 oder 4, **dadurch gekennzeichnet, dass** die Temperaturen in der Koextrusionsvorrichtung dem folgenden Gesetz unterliegen:
TE = TFn = TFIL1 = TFILn = TFLFIN = TP1 = TPn = TPFIN = 2 - 10°C, wobei diese Temperaturen auf folgende Weise definiert werden:
TE = Temperatur der Ummantelung im Versorgungstrichter des Systems
TFn = Temperatur der Füllung n in ihrem Versorgungstrichter
TFIL 1 = durchschnittliche Temperatur der Wand des der Länge L1 entsprechenden Spritzmundstücks
TFIL n = durchschnittliche Temperatur der Wand des der Länge Ln - (L n-1) entsprechenden Spritzmundstücks
TP1 = durchschnittliche Temperatur des Produkts am Ausgang der Kanüle 1
TPn = durchschnittliche Temperatur des Produkts am Ausgang der Kanüle n
TFILFIN = durchschnittliche Temperatur der Wand des der Länge L - Ln entsprechenden Spritzmundstücks
TPFIN = durchschnittliche Temperatur des Produkts am Ausgang des Spritzmundstücks.

7. Verfahren gemäß Anspruch 3 oder 4, **dadurch gekennzeichnet, dass** die Temperaturen in der Koextrusionsvorrichtung dem folgenden Gesetz unterliegen:
TE = TFn = 30-80°C; 80°C > TFIL 1 > TFIL n > TFILFIN = 30°C; TP1 = TPn = TPFIN = 70 bis 35°C.

8. Verfahren gemäß Anspruch 3 oder 4, **dadurch gekennzeichnet, dass** die Temperaturen in der Koextrusionsvorrichtung dem folgenden Gesetz unterliegen:
TE = TFn = 90-100°C; 80°C > TFIL 1 > TFILn > TFILFIN = 30°C; TP1 = TPn = TPFIN = 85 bis 35°C.

9. Verfahren gemäß Anspruch 1 bis 8, **dadurch gekennzeichnet, dass** man für das Füllmaterial Mischprodukte auf der Grundlage von Käsesorten, Fleischsorten, Eiern, Fischfleisch, Surimi, Obst, Gemüsesorten verwendet.

10. Verfahren gemäß Anspruch 1 bis 9, **dadurch gekennzeichnet, dass** das Ummantelungsmaterial einen Trockenauszug hat, der 60 % und typischerweise 30 bis 50 % erreichen kann.

11. Verfahren gemäß Anspruch 1 bis 10, **dadurch gekennzeichnet, dass** der Koextrusionskopf durch zwei einfache Pumpen mit Stopftrichtern jeweils für das Füllmaterial und für das Ummantelungsmaterial versorgt wird.

12. Verfahren gemäß Anspruch 11, **dadurch gekennzeichnet, dass** die Transferpumpen der Trichter zum Koextrusionskopf (11) direkt auf dem Koextrusionssystem transfertiert werden.

13. Verfahren gemäß Anspruch 11, **dadurch gekennzeichnet, dass** die Pumpen auf einem geschlossenen, mit einem Wärmetauscher ausgerüsteten Zwischensystem angeschlossen werden, so dass die Temperatur der Materialien genau vor ihrem Eingang im Koextrusionskopf kontrolliert wird.

14. Verfahren gemäß Anspruch 1 bis 13, **dadurch gekennzeichnet, dass** der Druck und die Verteilung des zur Bildung der Ummantelung bestimmten Materialflusses mithilfe einer auf dem Kanal der Ummantelung des Produkts eingeschobenen Verteilerplatte geregelt werden.

15. Verfahren gemäß Anspruch 1 bis 13, **dadurch gekennzeichnet, dass** mehrere koextrudierte Abschnitte, eventuell mit Gelmittel zusammengesetzt und dann thermisch behandelt werden, so dass ein tranchierbarer rekonstruierter Block erhalten wird.

16. Verfahren gemäß Anspruch 1 bis 15, **dadurch gekennzeichnet, dass** das Produkt am Ausgang des Spritzmundstücks tranchiert und dann kontinuierlich oder nicht kontinuierlich verpackt wird.

17. Verfahren gemäß Anspruch 1 bis 16, **dadurch gekennzeichnet, dass** die lineare Ablaufgeschwindigkeit am Ausgang des Spritzmundstücks in der Größenordnung von 5 bis 10 Metern /Minute liegt.

18. Koextrusionsvorrichtung durch Umsetzung des Verfahrens gemäß Anspruch 1 bis 17, **dadurch gekennzeichnet, dass** es Folgendes umfasst:
- Versorgungsmittel (7) des Materials der Ummantelung des Produkts;
- Versorgungsmittel (8) des Füllmaterials des Produkts;
- eine aus einen Koextrusionskopf (11) mündende, von einem Koextrusions-Spritzmundstück (6) verlängerte Extrusionskammer (12);
- erste Transfermittel (9) des Ummantelungsmaterials bis in die Koextrusionskammer;
- zweite Transfermittel (10) des Füllmaterials bis zum Koextrusionskopf ohne Vermischung des Füllmaterials und des Ummantelungsmaterials;
- wobei das Koextrusions-Spritzmundstück Folgendes umfasst:
- einen ersten Spritzmundstücks-Abschnitt, in dem die Bildungsstufe der festen Ummantelung erfolgt, wobei dieser erste Abschnitt durch wenigstens eine Kanüle (14) durchquert wird, wobei das Ende des ersten Abschnitts durch das Ausgangsende (22) der Kanüle (29) mit der kürzesten Länge (L1) definiert wird, wobei jede Kanüle ein aus dem Koextrusionskopf austretendes Füllmaterial transferiert, wobei das aus dem Koextrusionskopf mündende Material der Ummantelung zwischen der Innenwand (23) des Spritzmundstücks und der Au-βenwand (24) der Kanüle oder der Kanülen transferiert wird;
- Zum Verfestigen der Ummantelung bestimmte Abkühlmittel des genannten ersten Abschnitts;
- ein zweiter Abschnitt ausgehend von dem Ausgang der Kanüle oder den Kanülen bis zum Ausgang des Spritzmundstücks und in dem die Ummantelung der aus der Kanüle durch die verfestigte Ummantelung austretenden Füllung erfolgt.

19. Vorrichtung gemäß Anspruch 18, **dadurch gekennzeichnet, dass** die Kanülen konzentrisch sind, wobei die peripherischste Kanüle die kürzeste ist, oder nicht konzentrisch sind.

20. Vorrichtung gemäß Anspruch 18 oder 19, **dadurch gekennzeichnet, dass** die Länge L1 der kürzesten Kanüle wenigstens 10 cm lang ist, damit die Ummantelung sich verfestigt und typischerweise 30 bis 150 cm lang, wobei der Unterschied zwischen der Länge L des Spritzmundstücks und der Länge Ln der längsten Kanüle wenigstens 10 cm und typischerweise 30 bis 600 cm beträgt.

21. Vorrichtung gemäß Anspruch 18 bis 20, **dadurch gekennzeichnet, dass** sie Regulierungsmittel der Temperatur bei den ersten Transfermitteln, Regulierungsmittel der Temperatur bei den zweiten Transfermitteln, Regulierungsmittel der Temperatur des ersten Abschnitts des Spritzmundstücks, Regulierungsmittel der Temperatur des zweiten Abschnitts des Spritzmundstücks umfasst.

22. Vorrichtung gemäß Anspruch 18 bis 21, **dadurch gekennzeichnet, dass** das Spritzmundstücks einen kreisförmigen, quaderförmigen oder einen Durchmesser in einer verspielten Form hat.

23. Vorrichtung gemäß Anspruch 18 bis 22, **dadurch gekennzeichnet, dass** das Spritzmundstück einen Querschnitt in einer von der Form der Kanüle oder den Kanülen unterschiedlichen oder mit ihr identischen Querschnitt hat.

24. Vorrichtung gemäß Anspruch 18 bis 23, **dadurch gekennzeichnet, dass** das Spritzmundstück einen Querschnitt mit einem zwischen 5 und 50 mm inbegriffenen und bevorzugt einen Durchmesser von 7 bis 20 mm hat.

25. Vorrichtung gemäß Anspruch 18 bis 24, **dadurch gekennzeichnet, dass** der Abschnitt des Spritzmundstücks zwischen 1,2 und 5 Mal dem Abschnitt der Kanüle inbegriffen ist.

26. Lebensmittelprodukt vom Typ gefüllte Spezialität, das durch Umsetzung des Verfahrens gemäß Anspruch 1 bis 17 erhalten wird, mit einer sich in Längsrichtung erstreckenden, wenigstens eine Füllung umgebenden festen Ummantelurig, wobei das Produkt im Querschnitt eine kleinere Abmessung als 20 mm, die typischerweise zwischen 10 und 20 mm inbegriffen ist, hat, **dadurch gekennzeichnet, dass** die feste Ummantelung aus Käse besteht und einen zwischen 40 und 60 % inbegriffenen Trockenextrakt hat, wobei das Produkt somit ohne zu kleben greifbar ist.

27. Produkt gemäß Anspruch 26, **dadurch gekennzeichnet, dass** sein Querschnitt quaderförmig oder abgerundet ist oder eine verspielte Form aufweist.

28. Produkte gemäß Anspruch 26 oder 27, **dadurch gekennzeichnet, dass** seine Länge nach dem Tranchieren zwischen 1 und 10 Mal seiner Breite im Querschnitt inbegriffen ist.

29. Produkt gemäß Anspruch 26 bis 28, **dadurch gekennzeichnet, dass** die Füllung eine käsehaltige oder nicht käsehaltige, aus der Fleischpasteten, Pasteten auf Fischbasis oder anderen Meeresprodukten, Kräutern, Gewürzen und Aromen umfassenden Gruppe ausgewählte Zusammensetzung hat.

30. Produkt gemäß Anspruch 26 bis 29, **dadurch gekennzeichnet, dass** es wenigstens drei konzentrische Schichten umfasst, wobei die äußere Ummantelung aus einer käsehaltigen Zusammensetzung besteht.

31. Lebensmittelprodukt, **dadurch gekennzeichnet, dass** es die Form eines rekonstruierten, tranchierbaren, durch die Zusammensetzung mehrerer Produkte gemäß Anspruch 26 bis 30 erhaltenen Blocks aufweist, wobei dieses rekonstruierte Produkt eine Vielzahl von mit Füllung versehenen Kanälen umfasst.

## Claims

1. A method designed for manufacturing a food product (5) comprising a solid shell enclosing at least one food-based filling (3) intended to form the shell for the product and at least one filling food material (4) in a coextrusion device (1) comprising a coextrusion die (6) fed with the food base and the filling material or materials, **characterised in that** it comprises the following successive steps:
- formation, in a first section (S1) of the die (6) of the solid shell by chilling the food base, this first section being crossed longitudinally by at least one tube (14) for transferring the filling, one tube per filling material, and opening into a second section (S2) of the die (6), the start of the second section being defined by the end (22) of the output of the shortest length (L1) tube;
- filling, in the second section (S2) of the die, of the solid shell formed in the first part of the die with the filling material or materials coming out of the tubes (14, 27, 28, 29) that cross the first section;
- recovery of the product comprising the outer shell filled with the filling material or materials, at the output (21) of the die.

2. A method according to claim 1, **characterised in that** the shell is formed by chilling in the first section of the die, typically by means of circulating cold water or a similar fluid.

3. A method according to claim 2, **characterised in that** natural cheeses, green curds and non-melted cheese specialities are used to make the material of the shell.

4. A method according to claim 2, **characterised in that** melted cheeses and melted cheese specialities with or without added salt are used to make the material of the shell.

5. A method according to any one of the claims from 2 to 4, **characterised in that** it comprises the following steps:
- preparing the filling and the shell at a temperature of around 90°C in the feeding hoppers (7, 8);
- chilling the filling to a temperature of around 80°C and chilling the shell to a temperature of around 60°C, between the feeding hoppers (7, 8) and the coextrusion head (11);
- extruding the shell, chilling the first section of the die to a temperature of around 50°C in order to solidify the shell;
- extruding the filling that fills the shell produced in the first section, chilling the second section (S2) of the die to a temperature of around 30°C, with the product leaving the die having a temperature of around 38°C.

6. A method according to claim 3 or 4, **characterised in that** the temperatures in the coextrusion device are governed by the following law:
TE = TFn = TFIL1 = TFILn = TFILFIN = TP1 = TPn = TPFIN = 2-10°C
where these temperatures are defined as follows:
TE = temperature of the shell in the feeding hopper of the system
TFn = temperature of the filling n in its feeding hopper
TFIL 1 = average temperature of the wall of the die corresponding to the length L1
TFIL n = average temperature of the wall of the die corresponding to the length Ln - (L n-1)
TP1 = average temperature of the product coming out of the tube 1
TPn = average temperature of the product coming out of the tube n
TFILFIN = average temperature of the wall of the die corresponding to the length L - Ln
TPFIN = average temperature of the product coming out of the die.

7. A method according to claim 3 or 4, **characterised in that** the temperatures in the coextrusion device are governed by the following law:
TE = TFn = 30-80°C; 84°C > TFIL 1 > TFIL n > TFILFIN = 30°C; TP1 = TPn = TPFIN = 70 to 35°C.

8. A method according to claim 3 or 4, **characterised in that** the temperatures in the coextrusion device are governed by the following law:
TE = TFn = 90-100°C; 80°C > TFIL 1 > TFIL n > TFILFIN = 30°C; TP1 = TPn = TPFIN = 85 to 35°C.

9. A method according to any one of the claims from 1 to 8, **characterised in that** composite products with a cheese, meat, egg, fish, surimi, fruit or vegetable base are used to make the filling material.

10. A method according to any one of the claims from 1 to 9, **characterised in that** the material of the shell can have a solids content of up to 60%, typically between 30% and 50%.

11. A method according to any one of the claims from 1 to 10, **characterised in that** the coextrusion head is fed by two simple pumps with force-feeding hoppers, respectively for the filling material and for the shell material.

12. A method according to claim 11, **characterised in that** the pumps for transferring material from the hoppers to the coextrusion head (11) are connected directly to the coextrusion system.

13. A method according to claim 11, **characterised in that** the pumps are connected to an intermediate closed system provided with a heat exchanger, so as to control the temperature of the materials immediately before they enter the coextrusion head.

14. A method according to any one of the claims from 1 to 13, **characterised in that** the pressure and the distribution of the flow of material intended to form the shell are regulated with the help of a diffusion plate inserted in the channel of the product shell.

15. A method according to any one of the claims from 1 to 13, **characterised in that** several coextruded segments are assembled, if necessary with a gelling agent, and then treated with heat so as to obtain a sliceable reconstituted block.

16. A method according to any one of the claims from 1 to 15, **characterised in that** the product coming out of the die is sliced and then packaged, continuously or discontinuously.

17. A method according to any one of the claims from 1 to 16, **characterised in that** the linear output speed from the die is between 5 and 10 metres per minute.

18. A coextrusion device implementing the method according to any one of the claims from 1 to 17, **characterised in that** it comprises:
- feeding means (7) for the material of the product shell;
- feeding means (8) for the material of the product filling;
- a coextrusion chamber (12) ending of a coextrusion head (11) extended by a coextrusion die (6)
- a first set of means (9) for transferring the material of the shell into the coextrusion chamber;
- a second set of means (10) for transferring the filling material into the coextrusion head, without mixing the filling material and the shell material;
- the longitudinal coextrusion die comprising:
- a first die section, in which the solid shell forming step takes place, this first section being crossed by at least one tube (14), the end of the first section being defined by the output end (22) of the shortest length (L1) tube (29), each tube transferring a filling material coming out of the coextrusion head, the shell material coming out of the coextrusion head being transferred between the inside wall (23) of the die and the outside wall (24) of the tube or tubes;
- means for chilling the said first section, intended for solidifying the shell;
- a second section, from the output of the tube or tubes, to the output of the die, in which the filling coming out of the tube is enclosed in the solid shell.

19. A device according to claim 18, **characterised in that** the tubes are concentric, with the outermost tube being the shortest, or non-concentric.

20. A device according to claim 18 or 19, **characterised in that** the length L1 of the shortest tube is at least 10 cm so that the shell solidifies, and typically from 30 to 150 cm, the difference between the length L of the die and the length Ln of the longest tube being at least 10 cm, and typically from 30 to 600 cm.

21. A device according to any one of the claims from 18 to 20, **characterised in that** it comprises means for regulating the temperature at the level of the first transfer means, means for regulating the temperature at the level of the second transfer means, means for regulating the temperature of the first section of the die and means for regulating the temperature of the second section of the die.

22. A device according to any one of the claims from 18 to 21, **characterised in that** the section of the die is circular, parallelepipedal or novelty.

23. A device according to any one of the claims from 18 to 22, **characterised in that** the cross section of the die has a shape that is identical to or different from that of the tube or tubes.

24. A device according to any one of the claims from 18 to 23, **characterised in that** the diameter of the cross section of the die ranges from 5 to 50 mm, preferably from 7 to 20 mm.

25. A device according to any one of the claims from 18 to 24, **characterised in that** the section of the die is comprised between 1.2 and 5 times the section of the tube.

26. A filled speciality food product, obtained through implementation of the method in accordance with any one of the claims from 1 to 17, comprising a solid shell that extends longitudinally, enclosing at least one filling, the cross section of the product having a dimension of less than 20 mm, typically comprised between 10 and 20 mm, **characterised in that** the solid shell is a cheese-based composition and has a solids content of between 40 and 60%, which means that the product can be picked up without feeling sticky.

27. A product according to claim 26, **characterised in that** the shape of its cross section is parallelepipedal, round or novelty.

28. A product according to claim 26 or 27, **characterised in that**, after slicing, its length is comprised between 1 and 10 times the width of its cross section.

29. A product according to any one of the claims from 26 to 28, **characterised in that** the filling has a cheese-based or non-cheese-based composition, chosen from the group consisting of meat pâtés, fish or other seafood pâtés and herb and spice pâtés.

30. A product according to any one of the from claims 26 to 29, **characterised in that** it comprises at least three concentric layers, the outer shell having a cheese-based composition.

31. A food product, **characterised in that** it is presented in the form of a sliceable reconstituted block obtained by assembling several products in accordance with any one of the claims from 26 to 30, the said reconstituted product comprising a multiplicity of channels stuffed with a filling.
